# EUROPÄISCHE PATENTSCHRIFT

(11) **EP 2 639 052 B1**
(45) Veröffentlichungstag und Bekanntmachung des Hinweises auf die Patenterteilung: **15.06.2016**
(21) Anmeldenummer: 13157765.2
(22) Anmeldetag: 05.03.2013
(51) Int. Cl.: B29C 70/48, B29C 33/00

(54) **Vakuumgestütztes Verpressen**
Vacuum-assisted pressing
Compression assistée par vide

(30) Priorität: 16.03.2012 DE 102012204136
(43) Veröffentlichungstag der Anmeldung: 18.09.2013
(73) Patentinhaber: Audi AG, 85045 Ingolstadt (DE)
(72) Erfinder: Korber, Andreas, 81249 München (DE); Kaiser, Michael, 81547 München (DE); Lang, Markus - Thomas, 80809 München (DE)

(56) Entgegenhaltungen:
- DE-A1-102007 046 734
- GB-A- 2 432 336

## Beschreibung

Die vorliegende Erfindung betrifft ein Formwerkzeug zur Herstellung eines endkonturnahen Faser-Kunststoff-Verbundes (FKV) aus einem FKV-Halbzeug, umfassend eine erste Werkzeughälfte, eine zweite Werkzeughälfte und eine erste Dichteinrichtung. Des Weiteren betrifft die Erfindung ein Verfahren zur Herstellung eines endkonturnahen Faser-Kunststoff-Verbundes (FKV) mit einem eine erste Werkzeughälfte und eine zweite Werkzeughälfte umfassenden Formwerkzeug.

Faser-Kunststoff-Verbunde können beispielsweise mit dem Nasspress-Verfahren, mit dem RTM-Verfahren (Resin Transfer Molding/Moul)ding ) oder durch temperaturgestütztes Verpressen bzw. Kompaktieren von endlosfaserverstärkten Thermoplasten hergestellt werden. Jedes der Verfahren hat seine Vorzüge und seine Nachteile.

Bei dem Nasspressverfahren können beispielsweise zunächst trockene, 2-/3-dimensionale Fasergebilde aus Endlosfasern umgeformt und gegebenenfalls in eine dreidimensionale Form gebracht werden. Dann werden die Endlosfasern zueinander fixiert und es wird auf das so umgeformte trockene Fasergebilde in einer speziellen Applikationsvorrichtung außerhalb oder innerhalb des eigentlichen Nasspresswerkzeuges ein duroplastischer Matrixwerkstoff, beispielsweise durch Sprühen, Gießen oder dergleichen, appliziert. Dieses FKV-Halbzeug kann im Anschluss in ein herkömmliches, seitlich offenes Nasspresswerkzeug eingelegt werden. Es ist auch möglich, den Umformschritt des Preformings in einer Presse mit dem Nasspressverfahren zu kombinieren. Weiterhin ist es denkbar, dass die Zuschnitte/Preforms mit Harz versehen werden und anschließend das flächige Gebilde in der Presse umgeformt wird. Üblicherweise sind derartige Nasspresswerkzeuge so gestaltet, dass ein Schließen unter Umgebungsdruck stattfindet. Somit wird beim Schließen des Werkzeuges und Verpressen des FKV-Halbzeuges der Matrixwerkstoff aufgrund des fehlenden seitlichen Gegendruckes nahezu ungehindert aus den seitlichen Öffnungen des Nasspresswerkzeuges gedrückt. Dies ist insofern Nachteilig, da die Menge des aus den seitlichen Öffnungen austretenden Matrixwerkstoffes nur sehr grob reproduziert werden kann, sodass ebenfalls nur eine geringere Reproduzierbarkeit des Matrixanteiles im Faser-Kunststoff-Verbund erreicht werden kann. Weiterhin kann der Anpressdruck nicht reproduzierbar sein, beispielsweise wenn die Presse weggesteuert betrieben wird.

Zudem macht der an den seitlichen Öffnungen des Nasspresswerkzeuges austretende Matrixwerkstoff eine Nachbearbeitung des Faser-Kunststoff-Verbundes notwendig. Des Weiteren kann bei dem Verpressen des FKV-Halbzeuges mit dem Nasspresswerkzeug die eingeschlossene Luft nur teilweise entweichen. Dies kann zu Lunkern und gegebenenfalls entsprechend nachteiligen Bauteileigenschaften führen. Zudem hat dies, insbesondere in den Randbereichen, den Nachteil, dass verglichen zum RTM-Verfahren nur schlechtere Bauteileigenschaften erreicht werden können. Zudem ist das Nasspress-Verfahren in Folge der notwendigen Endkonturbearbeitung zudem arbeitsintensiver.

Mit dem RTM-Verfahren können Formteile aus Duroplasten und Elastomeren hergestellt werden. Im Vergleich zum Pressen wird hierbei die Vormasse mittels eines Kolbens von einer meist beheizten Vorkammer über Verteilerkanäle in das Formwerkzeug eingespritzt, wo sie unter Wärme und Druck aushärtet. Dabei kann das vorgewärmte Harz unter Druck mit Kolben-, Axial-Pumpen, aber auch aus einem gegebenenfalls mit Pressluft beaufschlagtem Reservoir in das Werkzeug injiziert werden. Soll dabei ein Faser-Kunststoff-Verbund hergestellt werden, so wird meist zuvor in das Formwerkzeug ein 2-/3-dimensionales Fasergebilde oder ein FKV-Halbzeug eingelegt und dieses, wie zuvor beschrieben, mit der Matrix umspritzt, bzw. bei Duromeren mit dem Matrixmaterial imprägniert werden. Faser-Kunststoff-Verbunde, hergestellt durch das RTM-Verfahren, weisen hochwertige Bauteileigenschaften auf, wobei insbesondere die Ausbildung von Lunkern bzw. Fehlstellen im Bauteil verringert sind. Nachteilig ist jedoch, dass Oberflächenschichten nur mit großem Aufwand direkt während des Herstellungsprozesses auf der Oberfläche des Faser-Kunststoff-Verbundes bzw. des FKV-Halbzeuges aufgebracht werden können. Zudem wird das eingebrachte FKV-Halbzeug und somit auch eine zuvor auf das FKV-Halbzeug aufgebrachte Oberflächenschicht vom Matrixwerkstoff umspült, sodass die Oberflächeneigenschaft der Oberflächenschicht zumindest teilweise durch das RTM-Verfahren unerwünscht verändert wird. Deshalb werden funktionelle Oberflächenschichten bei dem RTM-Verfahren zumeist nach der Ausbildung des Faser-Kunststoff-Verbundes in einem weiteren Arbeitsschritt auf die Oberfläche des Faser-Kunststoff-Verbundes aufgebracht. Somit ist hinsichtlich spezieller Oberflächenschichten das RTM-Verfahren arbeitsintensiver.

Bei dem Verpressen von endlosfaserverstärkten Thermoplasten, wie beispielsweise Organoblechen, Semipregs, UD-Tapes oder textilen Hybridhalbzeugen, werden die vorgenannten endlosfaserverstärkten Thermoplaste mittels eines Formwerkzeuges thermisch unterstützt verpresst. Solche endlosfaserverstärkte Thermoplaste können aus technischen und/oder thermoplastischen Fasern aufgebaut sein. Bei der Verpressung von nicht oder nur teilweise konsolidierten Halbzeugen oder Flächenverbunden, beispielsweise bei einem Lagenaufbau aus konsolidierten UD-Tapes oder konsolidierten Einzelschichten, besteht das Problem, dass beim Verpressen die Luft aus dem bzw. den FKV-Halbzeugen herausgedrückt werden muss. Nachteilig wird beim Verpressen die bereits schon stark erhitzte Luft zudem noch stark komprimiert und es können sich düsenartige Kanäle ausbilden, aus denen die Luft zu entweichen versucht. In diesen düsenartigen Kanälen bzw. beim Austreten aus diesen düsenartigen Kanälen kann sich die Luft noch weiter erhitzen, sodass Dieseleffekte, Materialdegradation, Lunker oder Fehlstellen im Bauteil auftreten können.

Die GB 2 432 336 A offenbart die Merkmale des Oberbegriffs des Anspruchs 1 und zeigt ein im LRTM-Verfahren (light RTM) hergestelltes Bauteil. Das hierbei verwendete, gattungsgemäße Formwerkzeug weist eine erste Werkzeughälfte und eine zweite Werkzeughälfte auf, wobei zwei Dichtungen und eine Unterdruckverbindung vorgesehen sind, die eine luftdichte Verbindung der beiden Werkzeughälften gewährleisten. Eine zugeschnittene Schicht bestehend aus einer Verstärkungsschicht und einem Abstandsmittel in Form eines faserigen Belags wird in den Zwischenraum zwischen den beiden Werkzeughälften eingelegt. Ein Harz wird injiziert und fließt entlang der zugeschnittenen Schicht, die durchlässig ist, durch einen Kanal, wobei überflüssiges Harz in einem Auffangbehälter aufgefangen wird. Das Harz härtet aus und verbindet die Schicht mit dem Abstandsmittel. Um einen Spalt zwischen dem Abstandsmittel und der ersten Werkzeughälfte zu schließen, wird ein Grundierharz über einen Einlass injiziert. Das Grundierharz kann pigmentiert sein und bildet nach dem Aushärten die Außenschicht. Das fertige Teil wird dem Formwerkzeug nach dem Aushärten entnommen. Anschließend werden die Kanten beschnitten und eventuelle Spritzstellen entfernt.

Es besteht daher ein zunehmender Bedarf an einem Formwerkzeug, sowie an einem Verfahren, für die Herstellung von Faser-Kunststoff-Verbunden, die ähnliche gute Bauteileigenschaften aufweisen, wie die durch das RTM-Verfahren herstellbaren Faser-Kunststoff-Verbunde, bei denen aber mit nur geringem Aufwand die Oberflächeneigenschaften von zuvor aufgebrachten Oberflächenschichten während der Konsolidierung im Formwerkzeug erhalten werden können.

In einem Aspekt der Erfindung wird somit vorgeschlagen, ein Formwerkzeug zur Herstellung eines endkonturnahen Faser-Kunststoff-Verbundes (FKV) aus einem FKV-Halbzeug zu verwenden, das eine erste Werkzeughälfte, eine zweite Werkzeughälfte und eine erste Dichteinrichtung aufweist. Dabei kann in das geöffnete Formwerkzeug das FKV-Halbzeug eingelegt werden. Während eines Verschlussvorganges des Formwerkzeuges verschließt die erste Dichteinrichtung einen ersten Innenraum druckdicht gegenüber einem das Formwerkzeug umgebenden Außenraum. Beide Werkzeughälften können jeweils einen Konsolidierbereich aufweisen, mittels deren Zusammenwirken während eines Konsolidiervorganges des Formwerkzeuges das FKV-Halbzeug zu einem Faser-Kunststoff-Verbund konsolidiert wird. Im Falle von Duromeren/Elastomeren kann auch über Temperatur vernetzt bzw. ausgehärtet werden. Zudem ist eine Evakuiervorrichtung vorgesehen, mittels derer während des Verschlussvorganges der erste Innenraum evakuiert wird. Dabei ist das Formwerkzeug derartig ausbildbar, dass ein Nasspressverfahren bei Duromeren bzw. ein Konsolidieren von Thermoplasten angewendet werden kann.

Vorteilhaft kann durch die Evakuierung des ersten Innenraums die in dem FKV-Halbzeug befindliche Luft stark reduziert werden. Durch die Beaufschlagung mit einem Vakuum kann die in dem FKV-Halbzeug enthaltene Luft zudem derartig reduziert werden, dass sich qualitativ wesentlich höhere Bauteileigenschaften herstellen lassen, als bei einem herkömmlichen Nasspress-Verfahren bei Duromeren bzw. beim Konsolidieren von Thermoplasten.

Unter einem 1-dimensionalen Fasergebilde ist ein Fasergebilde zu verstehen, bei dem die Erstreckung des Fasergebildes in Richtung der Breite und der Höhe gegenüber der Erstreckung des Fasergebildes in Richtung der Länge vernachlässigbar ist. In anderen Worten ist die Erstreckung des Fasergebildes in Richtung der Länge vorherrschend und prägend. Dabei können beide Richtungen Breite oder Höhe im Wesentlichen eine gleiche Erstreckung aufweisen oder eine der beiden Richtungen kann in ihrer Erstreckung gegenüber der anderen signifikant vergrößert sein. Von dem Begriff 1- dimensionales Fasergebilde sind Fasern, Endlosfasern, Garne, Faserbündel, Faserstränge, Filamente, Filamentbündel, Rovings oder Mischformen umfasst.

Unter einem 2-dimensionalen Fasergebilde ist ein Fasergebilde zu verstehen, bei dem die Erstreckung des Fasergebildes in Richtung der Höhe gegenüber der Erstreckung des Fasergebildes in Richtung der Länge und der Breite vernachlässigbar ist. In anderen Worten ist die Erstreckung des Fasergebildes in Richtung der Länge und der Breite vorherrschend und prägend. Dabei können beide Richtungen Breite oder Länge im Wesentlichen eine gleiche Erstreckung aufweisen oder eine der beiden Richtungen kann in ihrer Erstreckung gegenüber der anderen signifikant vergrößert sein. Von dem Begriff 2-dimensionales Fasergebilde sind Gewebe, Gestricke, Gewirke, Vliesstoffe, unidirektionale abgelegte Faserschichten, Multiaxial-Gelege, Matten, Maschenwaren, Abstandsgewebe, Geflechtschläuche, Stickereien, Nähzeuge, Abreißgewebe oder Mischfornen umfasst.

Unter einem 3-dimensionalen Fasergebilde ist ein Fasergebilde zu verstehen, dessen Erstreckung in Richtung der Länge, der Breite und der Höhe gegenüber keiner der Richtungen vorherrschend ist. Dabei können alle Richtungen im Wesentlichen eine gleiche Erstreckung aufweisen oder eine oder zwei der drei Richtungen kann oder können in ihrer Erstreckung gegenüber den anderen oder der anderen signifikant vergrößert sein. Von dem Begriff 3-dimensionales Fasergebilde sind im Wesentlichen mehrere aufeinander geschichtete 2-dimensionale Fasergebilde zu verstehen. Dabei können die 2-dimensionalen Fasergebilde unterschiedlich ausgebildet sein. So ist es denkbar, dass beispielsweise eine unidirektionale Faserschicht von einem Vliesstoff als nächste Schicht gefolgt wird während ein Gewebe das 3-dimensionale Fasergebilde abschließen kann. Es können aber auch ausschließlich unidirektionale 2-dimensionale Fasergebilde zum Aufbau eines 3-dimensionalen Fasergebildes verwendet werden. Dabei können die unidirektionalen 2-dimensionalen Fasergebilde gleich orientiert oder unterschiedlich orientiert hinsichtlich ihrer Richtung sein. In letzterem Fall liegt ein Multiaxial-Gelege vor.

Ein Faser-Kunststoff-Verbund besteht im Wesentlichen aus zumindest einem 1-/2- oder 3-dimensionalen Fasergebilde, das in eine Kunststoff-Matrix eingebettet ist. Dabei wird das zumindest eine 1-/2- oder 3-dimensionale Fasergebilde von der Kunststoff-Matrix umgeben, die durch Adhäsiv- oder Kohäsivkräfte an das zumindest eine 1-/2- oder 3-dimensionale Fasergebilde gebunden ist. Als Materialien für Fasergebilde können Glasfasern, Kohlenstofffasern, Aramidfasern, PBO-Fasern, Polyethylenfasern, Naturfasern, Basaltfasern, Quarzfasern, Aluminiumoxidfasern, Siliziumcarbidfasern oder Mischformen zum Einsatz kommen. Als Materialien für die Matrix können Duroplaste, Thermoplaste, Elastomere, sowie Füllstoffe, gesättigte oder ungesättigte Polyesterharze, Epoxidharze, Vinylesterharze oder Mischformen zum Einsatz kommen.

Unter einem FKV-Halbzeug kann ein 2-/3-dimensionales Fasergebilde verstanden werden, das so viel Matrixmaterial enthalten kann, dass bei der Ausbildung des Faser-Kunststoff-Verbundes (FKV) in dem Formwerkzeug kein weiteres Matrixmaterial mehr eingebracht werden muss. Insofern wird während des Konsolidiervorganges kein Matrixmaterial analog dem RTM-Verfahren in das Formwerkzeug eingespritzt. Unter einem FKV-Halbzeug kann auch ein 2-/3-dimensionales Fasergebilde verstanden werden, dass als Preform, Vorform, Vorformling, Prepreg oder Mischform für einen Faser-Kunststoff-Verbund fungiert. Dabei kann das FKV-Halbzeug Kunststoffe aufweisen, die als Binder, Bindemittel, Imprägnierungsmittel, Haftvermittler oder Mischformen wirken. Mittels beispielsweise dieser Kunststoffe kann das FKV-Halbzeug in Form gehalten werden, so dass ein Verschieben der Fasergebilde zueinander beispielsweise beim Transport weitestgehend vermieden werden kann. Es ist auch denkbar, dass das FKV-Halbzeug als Faser-Matrix-Halbzeug ausgebildet ist. In diesem Falle ist das 2-/3-dimensionale Fasergebilde mit Matrixmaterial imprägniert, wobei das Matrixmaterial zumindest teilweise polymerisiert sein kann. Dabei kann das Matrixmaterial in dem Faser-Matrix-Halbzeug eine fixierende Funktion übernehmen, so dass ein Verschieben der Fasergebilde bzw. Faserschichten zueinander gegebenenfalls bei der Weiterverarbeitung zumindest verringert ist. Das FKV-Halbzeug kann auch als UD-Tape, Semipreg, Organoblech oder dergleichen ausgebildet sein.

Das Formwerkzeug ist aus zumindest zwei Werkzeughälften aufgebaut. Üblicherweise können die zwei Werkzeughälften auseinander gefahren werden, sodass sich das Formwerkzeug öffnen oder schließen lässt. Üblicherweise ist die zweite Werkzeughälfte stationär ausgebildet, während die erste Werkzeughälfte bewegt werden kann, sodass mittels der Bewegung der ersten Werkzeughälfte das Formwerkzeug geöffnet oder geschlossen werden kann. Jede der Werkzeughälften weist einen Konsolidierbereich auf, wobei durch Zusammenwirken der beiden Konsolidierbereiche beim Schließen des Formwerkzeuges die Formgebung bzw. die Konsolidierung des FKV-Halbzeuges stattfindet. Dabei kann ein derartiger Konsolidierbereich die jeweilig gewünschte Kontur aufweisen, die der Faser-Kunststoff-Verbund nach Bearbeitung durch das Formwerkzeug aufweisen soll.

Unter einer Evakuiervorrichtung ist eine Vorrichtung zu verstehen, mit der Luft abgesaugt werden kann. Somit kann eine Evakuiervorrichtung beispielsweise eine Vakuumpumpe, einen Vakuumspeicher, also ein evakuiertes Gefäß, oder dergleichen aufweisen.

Beim Schließen des Formwerkzeuges können drei Vorgänge unterschieden werden. Der Schließvorgang schließt das geöffnete Formwerkzeug. Der Schließvorgang startet mit Schließen des Formwerkzeuges und endet mit Beginn des Verschlussvorganges, bei dem eine erste Dichteinrichtung einen ersten Innenraum gegenüber einem das Formwerkzeug umgebenden Außenraum druckdicht verschließt. Somit wird der erste Innenraum durch die beiden Werkzeughälften und die erste Dichteinrichtung während des Verschlussvorganges begrenzt. Der Verschlussvorgang ist beendet, wenn der Konsolidiervorgang beginnt. Der Konsolidiervorgang beginnt, wenn die Konsolidierbereiche der beiden Werkzeughälften auf das eingelegte FKV-Halbzeug konsolidierend einwirken. Da eine zweite Dichteinrichtung vorhanden ist, beginnt der Konsolidiervorgang, wenn die zweite Dichteinrichtung einen zweiten Innenraum druckdicht während des Konsolidiervorganges verschließt.

Des Weiteren kann zumindest eine Werkzeughälfte aus zumindest zwei Werkzeugteilen und dementsprechend mehrteilig aufgebaut sein. Es ist auch denkbar, dass zumindest eine Werkzeughälfte aus 2, 3, 4, 5, 6, 8 oder 10 Werkzeugteilen aufgebaut ist. Auch andere Anzahlen von Werkzeugteilen sind denkbar. Dabei können die Werkzeughälften auch eine unterschiedliche Anzahl von Werkzeugteilen aufweisen.

Vorteilhaft kann durch die mehrteilige Ausbildung der zumindest einen Werkzeughälfte ein Austausch von Werkzeugteilen der jeweiligen Werkzeughälfte vorgenommen werden, sodass das Formwerkzeug einfach umrüstbar ist und die mit dem Formwerkzeug herstellbaren Faser-Kunststoff-Verbunde die unterschiedlichsten Formen aufweisen können.

Weiterhin kann zumindest eine Werkzeughälfte von einem seitlichen Randbereich, der den Konsolidierbereich zumindest teilweise randseitig umgibt, eingefasst werden. Dabei versteht man unter einer seitlichen Orientierung oder einem seitlichen Randbereich denjenigen Bereich der Werkzeughälften, mit dem die Werkzeughälften aneinander während des Verschlussvorganges oder des Konsolidiervorganges anliegen. Demzufolge kann der seitliche Randbereich den Konsolidierbereich vollständig randseitig umgeben oder der seitliche Randbereich ist an zumindest einer Stelle unterbrochen.

Vorteilhaft kann durch die Ausbildung eines seitlichen Randbereiches in eben diesen unterschiedlichen Funktionalitäten, wie beispielsweise Dichtungen, Spannelemente oder dergleichen, angebracht werden.

Des Weiteren kann zumindest eine Werkzeughälfte eine Schließvorrichtung aufweisen, mit der zumindest eine Werkzeughälfte bewegt werden kann, sodass der Abstand zwischen den Werkzeughälften verändert werden kann. Die Schließvorrichtung ist im Wesentlichen für die Bewegung der zumindest einen Werkzeughälfte während des Schließvorganges bzw. während des Verschlussvorganges zuständig.

Weiterhin kann auch eine Anpressvorrichtung vorgesehen sein, mit der zumindest eine Werkzeughälfte auf die andere Werkzeughälfte gepresst werden kann. Demzufolge ist die Anpressvorrichtung zum Aufbau der Anpresskräfte während des Konsolidiervorganges vorgesehen.

Es kann eine separate Schließvorrichtung und eine separate Anpressvorrichtung vorgesehen sein oder der Schließvorgang, der Verschlussvorgang und der Konsolidiervorgang werden durch ein und dieselbe Schließ-/Anpressvorrichtung vorgenommen.

Des Weiteren kann zumindest eine Werkzeughälfte zumindest einen in zumindest einem Randbereich ausgebildeten randseitigen Absaugkanal aufweisen, der den Außenraum mit dem ersten Innenraum fluidisch leitend verbindet und über den evakuiert wird. Ein derartiger randseitiger Absaugkanal kann als Bohrung ausgebildet sein oder beispielsweise als eine ausgefräste Nut, in die beispielsweise Inserts eingesetzt sind.

Vorteilhaft kann durch die randseitigen Absaugkanäle vor allem der Randbereich des ersten Innenraumes gründlich evakuiert werden.

Des Weiteren kann zumindest eine Werkzeughälfte zumindest einen in zumindest einem Konsolidierbereich ausgebildeten konsolidierseitigen Absaugkanal aufweisen, der den Außenraum mit dem jeweiligen Innenraum fluidisch leitend verbindet und über den der jeweilige Innenraum evakuiert wird. Derartige konsolidierseitige Absaugkanäle können ebenfalls als Bohrung und/oder als Nut oder dergleichen ausgebildet sein.

Vorteilhaft kann durch derartige konsolidierseitige Absaugkanäle vor allem der konsolidierseitige jeweilige Innenraum evakuiert werden.

Sieht man sowohl randseitige Absaugkanäle als auch konsolidierseitige Absaugkanäle vor, so gelingt eine besonders umfassende Evakuierung des jeweiligen Innenraumes.

Des Weiteren kann zumindest eine Werkzeughälfte zumindest eine im Randbereich umlaufende Nut aufweisen, in der ein jeweiliges Dichtelement angeordnet ist.

Vorteilhaft kann durch ein derartig in eine Nut eingesetztes Dichtelement dasselbe im Randbereich sicher fixiert werden, sodass ein Verrutschen des Dichtelementes während des Verschlussvorganges bzw. während des Konsolidiervorganges weitestgehend vermieden werden kann. Dabei kann die umlaufende Nut auch hinterschnitten ausgebildet sein. Ein in eine derartige hinterschnittene Nut eingesetztes Dichtelement ist auch bei ungünstiger Anordnung der Werkzeughälfte gegen ein unbeabsichtigtes Herausfallen gesichert. Demzufolge kann vorteilhaft eine zusätzliche Fixierung des Dichtelementes beispielsweise mit einem Klebstoff, Halteelementen oder dergleichen vermieden werden.

Weiterhin kann zumindest eine Werkzeughälfte zumindest eine zwischen der ersten Dichteinrichtung und dem Konsolidierbereich im Randbereich umlaufende Nut aufweisen, über die der erste Innenraum evakuiert wird. Eine derartige umlaufende Nut, in die kein Dichtelement eingesetzt wird, sondern die lediglich dazu da ist, eine gleichmäßige Evakuierung des ersten Innenraumes im Randbereich zu gewährleisten, kann fluidisch leitend mit randseitigen Absaugkanälen verbunden werden. Im Vergleich zu lediglich der Verwendung von randseitigen Absaugkanälen, bei denen der Randbereich jeweils nur im Bereich der Absaugkanäle punktuell evakuiert wird, kann sich das Vakuum in der umlaufenden Nut gleichmäßig ausbilden, sodass mittels der Nut und über den gesamten Randbereich die Luft abgesaugt werden kann.

Des Weiteren kann zumindest eine Werkzeughälfte im Konsolidierbereich zumindest eine Spannstufe bzw. Klemmstufe zum Tiefziehen zumindest einer Schicht des FKV-Halbzeuges aufweisen. Mit Hilfe einer Spannstufe bzw. Klemmstufe kann beim Verpressvorgang das Nachrutschen und/oder Verrutschen der Endlosfasern im Halbzeug verhindert bzw. minimiert werden. Die Höhe der Klemmstufe kann dabei ca. 40% der Materialstärke betragen. Eine Spannung bzw. Klemmung erfolgt üblicherweise umlaufend an der Werkzeugform.

Weiterhin kann die erste Dichteinrichtung eine auf den Randbereich der ersten Werkzeughälfte absenkbare Haube aufweisen, die während des Verschlussvorganges den zwischen der ersten Werkzeughälfte und der Haube angeordneten ersten Innenraum druckdicht umschließt. Dabei kann die zweite Werkzeughälfte in dem ersten Innenraum angeordnet sein. Eine derartig absenkbare Haube kann als Vakuumglocke, evakuierbarer Kasten oder dergleichen ausgebildet sein.

Vorteilhaft kann durch die Verwendung einer absenkbaren Haube auf eine spezielle, vakuumabsaugende Ausbildung der Werkzeughälften verzichtet werden. Demzufolge ist der konstruktive Aufwand vereinfacht. Aufgrund der konstruktiven Einfachheit der absenkbaren Haube können zudem unterschiedliche auswechselbare Werkzeughälften des Formwerkzeuges evakuiert werden, ohne dass die Werkzeughälften mit konstruktiv aufwendigen Elementen und Vorrichtungen zur Evakuierung versehen werden müssen. Somit lässt sich beispielsweise auch vorteilhaft ein schon bestehendes Formwerkzeug mit einer Vakuumabsaugung nachrüsten.

Des Weiteren kann die erste Dichteinrichtung ein zwischen dem Randbereich der jeweiligen Werkzeughälfte und einem Rand der Haube angeordnetes, erstes Dichtelement aufweisen, wobei während des Verschlussvorganges das erste Dichtelement den ersten Innenraum vom Außenraum druckdicht abtrennt. Ein derartiges erstes Dichtelement kann dabei in dem Randbereich der Werkzeughälfte fixiert sein oder in dem Rand der Haube. Zudem kann der Rand der Haube und/oder der Randbereich der Werkzeughälfte eine umlaufende Nut oder Aussparung aufweisen, in die das Dichtelement eingesetzt werden kann.

Des Weiteren kann die erste Dichteinrichtung ein zwischen den Randbereichen der Werkzeughälften angeordnetes, erstes Dichtelement aufweisen, wobei während des Verschlussvorganges das erste Dichtelement den ersten Innenraum vom umgebenden Außenraum druckdicht abtrennt.

Diese Ausführungsform zeichnet sich vorteilhaft durch eine kompakte Konstruktion aus, wobei die Randbereiche der Werkzeughälften mit dem ersten Dichtelement während des Verschlussvorganges die Druckdichtheit herstellen.

Weiterhin kann die erste Dichteinrichtung eine im Randbereich der ersten Werkzeughälfte angeordnete Anpressvorrichtung aufweisen, mittels der während des Verschlussvorganges das erste Dichtelement auf einen Randbereich der zweiten Werkzeughälfte gepresst wird.

Vorteilhaft kann durch eine derartige Anpressvorrichtung ein definiertes Anpressen des ersten Dichtelementes auf den Randbereich der zweiten Werkzeughälfte hergestellt werden. Zudem kann mittels einer derartigen Anpressvorrichtung eine aufgrund beispielsweise von Verschleiß abnehmende Anpresskraft nachjustiert werden.

Des Weiteren kann die erste Dichteinrichtung ein Anpresselement der Anpressvorrichtung aufweisen., die zumindest den Konsolidierbereich der ersten Werkzeughälfte randseitig umgibt und das eine zum Randbereich der zweiten Werkzeughälfte hin orientiertes erstes Dichtelement aufweisen kann.

Mittels eines derartigen Anpresselementes kann eine exakte, komplementäre Ausbildung des Randbereiches der ersten Werkzeughäjfte vermieden werden, da durch das Anpresselement die Funktion der druckdichten Anpressung des ersten Dichtelementes auf den Randbereich der zweiten Werkzeughälfte vom Randbereich der ersten Werkzeughälfte entkoppelt ist. Zudem ist vorteilhaft das Anpresselement austauschbar, sodass nach eintretendem Verschleiß die Wartung vereinfacht ist.

Weiterhin kann die erste Dichteinrichtung ein Spannelement aufweisen, das zwischen dem Randbereich der ersten Werkzeughälfte und dem Anpresselement angeordnet ist und mit dessen Spannkraft während des Verschlussvorganges das Anpresselement auf den Randbereich der zweiten Werkzeughälfte angepasst wird.

Ein derartiges Spannelement kann als Feder, als pneumatisches Spannelement, hydraulisches Spannelement oder dergleichen ausgebildet sein.
Vorteilhaft kann durch das Spannelement eine Nachjustierung der Spannkraft beispielsweise bei Verschleiß vorgenommen werden und zudem kann das Spannelement bei einem Wartungszyklus unproblematisch ausgetauscht werden.

Weiterhin kann die erste Dichteinrichtung ein weiteres erstes Dichtelement aufweisen, das zwischen der ersten Werkzeughälfte und dem Anpresselement angeordnet ist. Mittels dieses weiteren ersten Dichtelementes kann vorteilhaft der Spalt zwischen der ersten Werkzeughälfte und dem Anpresselement verschlossen werden, sodass ein stabileres und/oder höheres Vakuum aufgebaut werden kann.

Weiterhin weist die erste Dichteinrichtung einen in einer weitesten Verschlussposition des Formwerkzeuges zwischen den Randbereichen der beiden Werkzeughälften und dem ersten Innenraum angeordneten Absaugspalt auf, der maximal 20 mm groß sein kann. Der Absaugspalt kann auch maximal 15 mm, beispielsweise maximal 10 mm, insbesondere 8 mm und gegebenenfalls 6 mm groß sein oder sogar 3 mm.

Dabei ist unter einer weitesten Verschlussposition des Formwerkzeuges diejenige Position zu verstehen, die am Ende des Schließvorganges und am Anfang des Verschlussvorganges erreicht ist. In dieser weitesten Verschlussposition des Formwerkzeuges ist zum ersten Mal seit Beginn des Schließens des Formwerkzeuges der erste Innenraum durch die erste Dichteinrichtung druckdicht verschlossen. Vorteilhaft wird durch die Ausbildung eines derartigen Absaugspaltes eine ausreichend gleichmäßige und effiziente Absaugung des ersten Innenraumes vorgenommen, sodass die Luft nahezu vollständig aus dem ersten Innenraum evakuiert werden kann.

Des Weiteren weist die erste Dichteinrichtung einen in einer engsten Verschlussposition des Formwerkzeuges zwischen den Randbereichen der beiden Werkzeughälften und im ersten Innenraum angeordneten Absaugspalt auf, der maximal 5 mm groß sein kann. Es ist auch denkbar, dass der Absaugspalt in der engsten Verschlussposition maximal 4,5 mm, beispielsweise maximal 4 mm, insbesondere maximal 3 mm oder gegebenenfalls maximal 1 mm groß ist.

Dabei ist unter einer engsten Verschlussposition des Formwerkzeuges diejenige Position zu verstehen, die am Ende des Verschlussvorganges und am Anfang des Konsolidiervorganges vorliegt. Somit beginnt in der engsten Verschlussposition erstmalig seit Schließen das Formwerkzeug das eingelegte FKV-Halbzeug zu konsolidieren. Ist eine zweite Dichteinrichtung vorhanden, so beginnt diese in der engsten Verschlussposition erstmalig den zweiten Innenraum druckdicht zu verschließen.

Erfindungsgemäß wird durch eine derartige Ausbildung des Absaugspaltes in der engsten Verschlussposition ein Stoppen oder Behinderung des Konsolidiervorganges durch die Randbereiche der beiden Werkzeughälften verhindert. Zudem ist es aufgrund des Absaugspaltes möglich, auch während des Konsolidiervorganges den jeweiligen Innenraum weiterhin zu evakuieren.

Des Weiteren ist erfindungsgemäß in den Randbereichen der Werkzeughälften zwischen der ersten Dichteinrichtung und dem Konsolidierbereich eine zweite Dichteinrichtung angeordnet. Diese zweite Dichteinrichtung kann während des Konsolidiervorganges des Formwerkzeuges einen zweiten Innenraum druckdicht umschließen.

Definitionsgemäß ist der zweite Innenraum kleiner als der erste Innenraum ausgebildet. Aufgrund der zweiten Dichteinrichtung ist der zweite Innenraum seitlich begrenzt. Wird nun das FKV-Halbzeug durch die Konsolidierbereiche der beiden Werkzeughälften verpresst, so kann austretendes Matrixmaterial aufgrund der zweiten Dichteinrichtung nicht aus dem zweiten Innenraum austreten, sodass ein Druckaufbau in dem zumindest teilweise verflüssigten Matrixmaterial des FKV-Halbzeuges hergestellt werden kann. Aufgrund dieses durch die Begrenzung der zweiten Dichteinrichtung hervorgerufenen Druckaufbaus gelingt eine weitere Kompaktierung der gegebenenfalls noch eingeschlossenen Reste an Luft, was sich vorteilhaft in einer Verringerung des Lunkergehaltes niederschlägt.

Während somit die erste Dichteinrichtung im Wesentlichen dazu da ist, die Druckdichtheit hinsichtlich einer Evakuierung des ersten Innenraumes sicherzustellen, erfüllt die zweite Dichteinrichtung die Funktion der seitlichen Begrenzung des Formwerkzeuges, sodass auch in dem verflüssigten Matrixmaterial ein Druckaufbau während des Konsolidiervorganges hergestellt werden kann. Dabei kann bei fehlender zweiter Dichteinrichtung auch die erste Dichteinrichtung die Funktion des Druckaufbaus in dem Matrixmaterial während des Konsolidiervorganges übernehmen.

Des Weiteren kann die zweite Dichteinrichtung ein zwischen den Randbereichen der Werkzeughälften angeordnetes, zweites Dichtelement aufweisen, wobei während des Konsolidiervorganges das zweite Dichtelement den zweiten Innenraum druckdicht umschließt.

Vorteilhaft kann aufgrund der dementsprechenden Anordnung des zweiten Dichtelementes eine konstruktiv einfache Druckdichtheit des zweiten Innenraumes während des Konsolidiervorganges sichergestellt werden.

Weiterhin kann die zweite Dichteinrichtung einen in einer weitesten Konsolidierposition des Formwerkzeuges zwischen den Randbereichen der beiden Werkzeughälften und dem zweiten Innenraum angeordneten Ausgleichsspalt von maximal 5 mm aufweisen. Es ist ebenso denkbar, dass der Ausgleichsspalt maximal 4,5 mm, gegebenenfalls 4 mm, insbesondere maximal 3,5 mm, beispielsweise maximal 3 mm oder gegebenenfalls maximal 2,5 mm groß ist.

Vorteilhaft kann durch die dementsprechende Ausgestaltung des Ausgleichsspaltes in der weitesten Konsolidierposition des Formwerkzeuges ein weiteres Verpressen des FKV-Halbzeuges mittels der Konsolidierbereiche der Werkzeughälften vorgenommen werden. Zudem kann in den Ausgleichsspalt überschüssiges Matrixmaterial eingepresst werden.

Des Weiteren kann die zweite Dichteinrichtung einen in einer engsten Konsolidierposition des Formwerkzeuges zwischen den Randbereichen der beiden Werkzeughälften und dem zweiten Innenraum angeordneten Ausgleichsspalt von maximal 1 mm aufweisen. Es ist auch denkbar, dass der Ausgleichsspalt maximal 0,9 mm, insbesondere maximal 0,8 mm, gegebenenfalls maximal 0,7 mm oder beispielsweise maximal 0,6 mm groß ist.

Vorteilhaft kann durch eine derartige Ausgestaltung des Ausgleichsspaltes der durch den Ausgleichsspalt aufgespannte Raum derartig klein ausgewählt werden, dass ein Verlust an Matrixmaterial durch den Ausgleichsspalt möglichst klein gehalten wird.

Des Weiteren kann die zweite Dichteinrichtung einen zwischen dem Konsolidierbereich der ersten Werkzeughälfte und dem Randbereich der zweiten Werkzeughälfte angeordneten Spalt von maximal 1 mm aufweisen. Es ist auch denkbar, dass der Spalt maximal 0,9 mm, insbesondere maximal 0,8 mm, gegebenenfalls maximal 0,7 mm oder beispielsweise maximal 0,6 mm beträgt. Der Spalt kann aber auch maximal 0,5 mm, insbesondere maximal 0,4 mm, gegebenenfalls maximal 0,3 mm oder beispielsweise maximal 0,1 mm betragen.

Vorteilhaft kann aufgrund der dementsprechenden Größe des Spaltes in den Randbereichen des fertigen Faser-Kunststoff-Verbundes ein Materialüberstand ausgebildet werden, der eine aufwendige Nachbearbeitung aufgrund der Materialdicke des Materialüberstandes nicht benötigt.

Des Weiteren kann zumindest eines der Dichtelemente ein der Kontur des jeweiligen Randbereiches im Wesentlichen folgendes vollförmiges Dichtelement aufweisen oder sein.

Vorteilhaft kann aufgrund der vollförmigen Ausbildung derartiger Dichtelemente eine hohe Verschleißsicherheit und eine hohe Druckstabilität des Dichtelementes sichergestellt werden. Eine derartige vollförmige Ausbildung ist beispielsweise für das zweite Dichtelement von Vorteil, da dieses mit einer hohen Druckbeaufschlagung dennoch drucksicher funktionieren muss.

Des Weiteren kann zumindest eines der Dichtelemente ein/en der Kontur des jeweiligen Randbereiches im Wesentlichen folgenden hohlförmigen Dichtschlauch aufweisen oder sein.

Vorteilhaft kann durch den Einsatz von hohlförmigen Dichtschläuchen über eine hohe Wegstrecke beim Schließen des Werkzeuges eine Druckdichtheit des jeweiligen Innenraumes sichergestellt werden. Beispielsweise ist der Einsatz von derartigen hohlförmigen Dichtschläuchen vor allem bei ersten Dichtelementen sinnvoll, da gerade beim Verschlussvorgang eine große Strecke zurückgelegt werden muss bzw. der Weg von der weitesten Verschlussposition des Formwerkzeuges zu der engsten Verschlussposition des Formwerkzeuges einen großen Abstand aufweisen kann.

Des Weiteren kann zumindest eines der Dichtelemente eine der Kontur des jeweiligen Randbereiches im Wesentlichen folgenden Dichtlippe aufweisen oder sein.

Vorteilhaft kann durch den Einsatz von Dichtlippen ebenfalls über eine große Wegstrecke ein jeweiliger Innenraum beim Schließen des Formwerkzeuges druckdicht verschlossen werden.

Des Weiteren kann zumindest eines der Dichtelemente einen U-förmigen Querschnitt aufweisen. Zudem ist es auch denkbar, dass ein quaderförmiger Querschnitt und/oder ein runder Querschnitt und/oder ein kreisrunder Querschnitt und/oder ein ellipsoider Querschnitt und/oder ein trapezförmiger Querschnitt bei zumindest einem der Dichtelemente ausgebildet sein. Vorteilhaft kann durch eine dementsprechende Vielfalt von Querschnitten jedes beliebige Dichtproblem behoben werden. So ist es auch denkbar, dass zumindest eines der Dichtelemente zumindest zwei Bereiche aufweist, die einen unterschiedlichen Querschnitt und/oder eine unterschiedliche Erstreckung des Querschnittes aufweisen.

Des Weiteren kann in das Formwerkzeug eine Spritzgusseinrichtung integriert sein. Mittels dieser Spritzgusseinrichtung können einseitig und/oder zweiseitig während des Verschlussvorganges und/oder während des Konsolidiervorganges an das eingelegte FKV-Halbzeug zusätzliche Materialbereiche angespritzt werden. Dabei können die zusätzlichen Materialbereiche aus einem gleichen oder ähnlichen Matrixmaterial wie das Matrixmaterial des FKV-Halbzeuges bestehen. Es ist dabei ebenso denkbar, dass unterschiedliche Materialien zum Einsatz kommen.

Vorteilhaft kann durch das Anspritzen zusätzlicher Materialbereiche eine gewünschte Verstärkung des FKV-Halbzeuges bzw. des daraus herstellbaren Faser-Kunststoff-Verbundes hergestellt werden. Zudem kann mittels derartiger zusätzlicher Materialbereiche die Oberflächenstruktur des Faser-Kunststoff-Verbundes in gewünschter Art und Weise verändert werden, sowie auch dessen partielle Oberflächenbeschaffenheit. Dabei ist die Kombination des vakuumunterstützten Umformpressschrittes und/oder Konsolidierungsschrittes mit anschließendem Hinter- oder Umspritzen des Bauteils in einem Arbeitsschritt vorteilhaft hinsichtlich der Effizienz und der Produktionsgeschwindigkeit.

In einem weiteren Aspekt der Erfindung wird ein Verfahren zur Herstellung eines endkonturnahen Faser-Kunststoff-Verbund (FKV) mit einem eine erste Werkzeughälfte und eine zweite Werkzeughälfte umfassenden Formwerkzeug, insbesondere gemäß einer der vorhergehend beschriebenen Ausführungsformen, vorgeschlagen. Bei diesem Verfahren wird in das geöffnete Formwerkzeug ein FKV-Halbzeug eingelegt. Dann kann das Formwerkzeug während eines Schließvorganges geschlossen werden. Während eines Verschlussvorganges wird ein durch die Werkzeughälften begrenzter erster Innenraum durch eine erste Dichteinrichtung druckdicht verschlossen. Während eines Konsolidiervorganges wird das eingelegte FKV-Halbzeug zu dem Faser-Kunststoff-Verbund konsolidiert bzw. verpresst und ausgehärtet. Während des Verschlussvorganges kann mittels einer Evakuiervorrichtung der erste Zwischenraum evakuiert werden.

Vorteilhaft können durch die Evakuierung des ersten Zwischenraumes die eingangs genannten Vorteile erreicht werden.

Des Weiteren kann in beliebiger Anzahl und Reihenfolge, zusätzlich oder alternativ eine Unterbrechung des Schließens des Formwerkzeuges während des Verschlussvorganges bei einer vordefinierten ersten Verschlussposition durchgeführt werden. Dabei kann die vordefinierte erste Verschlussposition die weiteste Verschlussposition, die engste Verschlussposition oder eine zwischen diesen beiden Verschlusspositionen angeordnete Verschlussposition sein. Weiterhin kann die vordefinierte erste Verschlussposition mehr zur weitesten Verschlussposition oder mehr zur engsten Verschlussposition hin orientiert sein. Es ist ebenfalls denkbar, dass die vordefinierte erste Verschlussposition die Wegstrecke zwischen der weitesten Verschlussposition und der engsten Verschlussposition halbiert, im Faktor 2:1, im Verhältnis 3:1, im Verhältnis 3:2, im Verhältnis 4:1, im Verhältnis 5:1, im Verhältnis 6:1 oder im Verhältnis 10:1 teilt.

Vorteilhaft kann durch das Unterbrechen des Schließens des Formwerkzeuges bei einer vordefinierten ersten Verschlussposition ein weiteres Schließen des Formwerkzeuges verhindert werden, sodass genug Zeit für eine gründliche Evakuierung des ersten Innenraumes verbleibt.

Des Weiteren kann in beliebiger Anzahl und Reihenfolge, zusätzlich oder alternativ nach Erreichen einer vordefinierten ersten Konsolidierposition eine Unterbrechung des Konsolidiervorganges durchgeführt werden und das Formwerkzeug in eine vordefinierte zweite Verschlussposition überführt werden. Dabei kann die vordefinierte erste Konsolidierposition die weiteste Konsolidierposition, die engste Konsolidierposition oder eine zwischen diesen beiden Konsolidierpositionen angeordnete Konsolidierposition sein. Weiterhin kann die vordefinierte erste Konsolidierposition mehr zur weitesten Konsolidierposition oder mehr zur engsten Konsolidierposition hin orientiert sein. Es ist ebenfalls denkbar, dass die vordefinierte erste Konsolidierposition die Wegstrecke zwischen der weitesten Konsolidierposition und der engsten Konsolidierposition halbiert, im Faktor 2:1, im Verhältnis 3:1, im Verhältnis 3:2, im Verhältnis 4:1, im Verhältnis 5:1, im Verhältnis 6:1 oder im Verhältnis 10:1 teilt.

Vorteilhaft kann durch diese Unterbrechung des Konsolidiervorganges gegebenenfalls aus dem FKV-Halbzeug ausgepresste Luft durch zumindest teilweises Wiederholen des Verschlussvorganges zusätzlich abgesaugt werden, sodass die Luft vollständiger aus dem FKV-Halbzeug entfernt werden kann.

Des Weiteren kann in beliebiger Anzahl und Reihenfolge, zusätzlich, oder alternativ vor dem Einlegen in das Formwerkzeug eine Applizierung von Matrixmaterial auf das FKV-Halbzeug bereichsweise durchgeführt werden.

Vorteilhaft kann aufgrund der bereichsweisen Applizierung von Matrixmaterial die Luft vollständiger und einfacher über die materialfreien Zonen aus dem FKV-Halbzeug abgesaugt werden. Dabei kann das Matrixmaterial in einer derartigen Menge bereichsweise aufgetragen werden, dass während des Konsolidiervorganges auch die materialfreien Zonen mit dem Matrixmaterial verfüllt werden.

Des Weiteren kann in beliebiger Anzahl und Reihenfolge, zusätzlich oder alternativ ein Aufbringen einer Oberflächenschicht vor dem Einlegen in das Formwerkzeug auf das FKV-Halbzeug einseitig und/oder zweiseitig zumindest bereichsweise durchgeführt werden.

Derartige Oberflächenschichten können Folien aufweisen, beispielsweise Thermoplastfolien oder TP-Inserts oder einen thermoplastischen Faserverbundstoff wie beispielsweise ein konsolidiertes UD-Tape. Denkbar wäre auch, dass derartige Oberflächenschichten ein Organoblech aufweisen oder aufgetragene Materialschichten umfassend thermoplastische Kunststoffe, duroplastische Kunststoffe, Füllmaterialien, 1-/2-/3-dimensionale Fasergebilde oder dergleichen.

Vorteilhaft kann durch die Aufbringung einer derartigen Oberflächenschicht eine funktionelle Oberfläche zumindest bereichsweise auf dem Faser-Kunststoff-Verbund hergestellt werden. So ist es beispielsweise denkbar, dass mittels derartiger funktioneller Oberflächen ein Verschweißen von zwei schalenförmigen Faser-Kunststoff-Verbund-Bauteilen ermöglicht wird. Aber auch weitere Funktionalitäten wie beispielsweise eine Zähmodifikation, ein Steinschlagschutz, eine einfachere Lackierbarkeit oder dergleichen sind durch derartige oberflächlich aufgebrachte Oberflächenschichten möglich. Dabei können derartige Oberflächenschichten auf das FKV-Halbzeug durch ein separates Einlegen der Oberflächenschichten in das Formwerkzeug ausgebildet werden oder sie werden in einem vorhergehenden Prozess auf das FKV-Halbzeug appliziert. Des Weiteren sind auch anderen Möglichkeiten denkbar, wie beispielsweise eine Applikation von Harzen auf eine TP-Schicht mit einem entsprechend verteilten Harzauftrag oder gegebenenfalls eine Abdichtung der TP-Folien zum Werkzeug oder auch ein Harzauftrag zwischen den Lagen. Weitere denkbare Funktionalitäten, die durch derartige Oberflächenschichten erreicht werden können, sind zum Beispiel eine Steigerung der Oberflächenqualität oder die Übernahme von Schutzfunktionen wie beispielsweise einer Erhöhung von UV-Beständigkeit bzw. Medienbeständigkeit oder dergleichen. Dabei kann eine derartige Oberflächenschicht vollflächig oder auch nur lokal an bestimmten Stellen aufgebracht werden. Die Fixierung der dementsprechenden Oberflächenschicht kann über Vakuumsauger im Unterteil des Formwerkzeuges erfolgen. Denkbar ist auch die Einbringung von Werkstoffen in die Oberflächenschicht, die nicht nur oberflächenwirksame Funktionen übernehmen, sondern beispielsweise bei Organoblechen zur gezielten lokalen Verstärkung des Faser-Kunststoff-Verbundes herangezogen werden. Des Weiteren ist auch eine Umformung der in das Formwerkzeug eingelegten und auf das FKV-Halbzeug applizierten Oberflächenschicht während des Schließens des Formwerkzeuges durch zum Beispiel Tiefziehen denkbar. Dazu können in dem Werkzeug Spannstufen vorgesehen sein und zudem kann das Werkzeug Vertiefungen aufweisen zur Positionierung lokaler Oberflächenschichten.

Des Weiteren kann in beliebiger Anzahl und Reihenfolge, zusätzlich oder alternativ ein Aufheizen zumindest einer Werkzeughälfte während des Verschlussvorganges auf eine vorbestimmte Temperatur vorgenommen werden.

Vorteilhaft kann dadurch der Herstellprozess im Formwerkzeug verkürzt werden, da schon während des Verschlussvorganges ein Aufheizen zumindest einer Werkzeughälfte vorgenommen werden kann:

Es ist auch denkbar, dass während des gesamten Verschlussvorganges der erste Zwischenraum evakuiert wird.

Vorteilhaft kann demzufolge der gesamte Verschlussvorgang zur Evakuierung des ersten Zwischenraumes herangezogen werden, sodass ein dementsprechend qualitativ hochwertiges Vakuum in dem ersten Zwischenraum erzeugt werden kann.

Weiterhin kann zumindest teilweise auch während des Konsolidiervorganges der zweite Zwischenraum evakuiert werden.

Vorteilhaft kann aufgrund der Evakuierung während des Konsolidiervorganges auch während des Konsolidiervorganges aus dem FKV-Halbzeug herausgepresste Luft aus dem zweiten Zwischenraum entfernt werden.

In einem weiteren Aspekt der Erfindung wird ein Faser-Kunststoff-Verbund vorgeschlagen, der aus einem FKV-Halbzeug, insbesondere durch ein vorhergehend beschriebenes Verfahren und insbesondere mittels eines vorhergehend beschriebenen Formwerkzeuges hergestellt wird. Dabei weist ein derartiger Faser-Kunststoff-Verbund zumindest bereichsweise einseitig und/oder zweiseitig eine Oberflächenschicht auf, die vor der Herstellung im Formwerkzeug auf das FKV-Halbzeug appliziert wurde. Dabei wird die Oberflächenbeschaffenheit des Faser-Kunststoff-Verbundes in Bereichen der ursprünglich aufgebrachten Oberflächenschicht durch die Oberflächenbeschaffenheit der Oberflächenschicht im Wesentlichen bestimmt.

Vorteilhaft kann durch eine derartige Ausbildung der Oberflächenbeschaffenheit des Faser-Kunststoff-Verbundes zumindest ein funktioneller Oberflächenbereich hergestellt werden und dies im Vergleich zum RTM-Verfahren durch einen sehr einfachen unkomplizierten Prozess, ohne dass die Oberflächenbeschaffenheit der auf das FKV-Halbzeug aufgebrachten Oberflächenschicht wesentlich durch die Konsolidierung im Formwerkzeug beeinflusst wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch:
- Fig. 1: ein Formwerkzeug mit einer Anpressvorrichtung,
- Fig. 2: ein Formwerkzeug mit einer schlauchförmigen ersten Dichteinrichtung,
- Fig. 3: ein Formwerkzeug mit einer angepressten schlauchförmigen ersten Dichteinrichtung,
- Fig. 4 A-D: ein möglicher Prozess zur Ausbildung eines erfindungsgemäßen Faser-Kunststoff-Verbundes.

Ein Formwerkzeug 100 weist eine erste Werkzeughälfte 110 und eine zweite Werkzeughälfte 120 auf. Die erste Werkzeughälfte 110 kann in einen Konsolidierbereich 130 und einen Randbereich 140 unterteilt werden. Die zweite Werkzeughälfte 120 kann in einen Konsolidierbereich 150 und in einen Randbereich 160 unterteilt werden. Zwischen den beiden Konsolidierbereichen 130, 150 kann ein FKV-Halbzeug 170 in dem Formwerkzeug 100 angeordnet sein. Dabei kann das FKV-Halbzeug ein 1-/2-dimensionales Fasergebilde 180 aufweisen, auf das Matrixmaterial 190, beispielsweise durch Aufsprühen, aufgebracht ist. Dabei kann die Schicht des Matrixmaterials 190 durch Aussparungen 200 unterbrochen sein, durch die während des Konsolidiervorganges gegebenenfalls hoch in dem FKV-Halbzeug 170 befindliche Luft ausgepresst bzw. abgesogen werden kann. Des Weiteren kann eine erste Dichteinrichtung 210 in den Randbereichen 140, 160 der beiden Werkzeughälften 110, 120 vorgesehen sein, mittels der ein erster Innenraum derart druckdicht verschließbar ist, dass er evakuiert werden kann. Dabei ist der erste Innenraum durch die erste Werkzeughälfte 110, die zweite Werkzeughälfte 120 und durch die erste Dichteinrichtung 210 begrenzt, wenn sich das Formwerkzeug in einer Verschlussposition befindet.

Des Weiteren kann eine zweite Dichteinrichtung 220 vorgesehen sein, mit der ein zweiter Innenraum druckdicht während eines Konsolidiervorganges verschlossen werden kann. Dabei verhindert die zweite Dichteinrichtung 220 ein Austreten von Matrixmaterial aus dem zweiten Innenraum. Dabei wird der zweite Innenraum, wenn das Formwerkzeug 100 sich in einer Konsolidierposition befindet, durch die Werkzeughälften 110, 120 und durch die zweite Dichteinrichtung 220 begrenzt.

Des Weiteren kann die erste Dichteinrichtung 210 eine Anpressvorrichtung 230 aufweisen. Dabei kann die Anpressvorrichtung 230 ein Spannelement 240, ein Anpresselement 250 und ein erstes Dichtelement 260 aufweisen. Mittels des Spannelementes 240, das zwischen dem Anpresselement 250 und dem Randbereich 140 angeordnet ist, kann aufgrund dessen Anpresskraft das Anpresselement 250 auf den Randbereich 160 der zweiten Werkzeughälfte 120 gepresst werden. Zur Abdichtung des ersten Innenraumes kann dabei zwischen dem Anpresselement 250 und dem Randbereich 160 ein erstes Dichtelement 260 angeordnet werden. Dabei kann das erste Dichtelement 260 in das Anpresselement 250 eingesetzt sein oder in den Randbereich 160. Um nun den Spalt zwischen dem Anpresselement 250 und der ersten Werkzeughälfte 110 dichtend zu verschließen, kann zwischen diesen beiden Bauteilen ein weiteres erstes Dichtelement 270 angeordnet werden, wobei wiederum das weitere erste Dichtelement 270 entweder in dem Anpresselement 250 fixiert ist oder in der ersten Werkzeughälfte 110. Die zweite Dichteinrichtung 220 kann dabei ein zweites Dichtelement 280 aufweisen oder aus demselben bestehen.

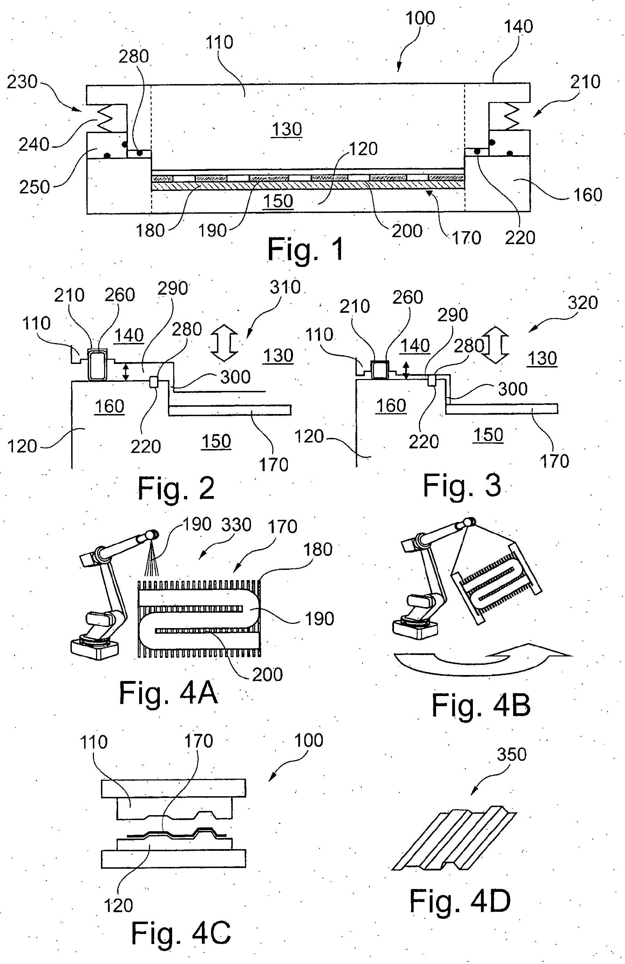

Wie in Fig. 2 gezeigt, kann als erste Dichteinrichtung 210 bzw. als erstes Dichtelement 260 eine hohlförmige Schlauchdichtung verwendet werden, die sich über weite Wegstrecken den ersten Innenraum druckdicht verschließend komprimieren lässt. Zwischen den beiden Randbereichen 140, 160 ist im ersten Innenraum ein Absaugspalt bzw. Ausgleichsspalt 290 angeordnet. Zwischen dem Konsolidierbereich 130, der ersten Werkzeughälfte 110 und dem Konsolidierbereich 150 der zweiten Werkzeughälfte 120 ist ein Spalt 300 angeordnet.

In der Fig. 2 ist die weiteste Verschlussposition 310 dargestellt, während in der Fig. 3 die engste Verschlussposition 320 dargestellt ist. In der weitesten Verschlussposition 310 kann mit der Absaugung bzw. Evakuierung des ersten Innenraums begonnen werden, da die erste Dichteinrichtung 210 eben diesen ersten Innenraum druckdicht verschließt.

In der, wie in Fig. 3 dargestellt, engsten Verschlussposition 320 kann die Konsolidierung des FKV-Halbzeuges 170 beginnen und die zweite Dichteinrichtung 220 verschließt den zweiten Innenraum, sodass aus dem zweiten Innenraum kein Matrixmaterial ausgepresst werden kann. Demzufolge ist der in der Fig. 2 gezeigte Absaugspalt 290 größer als der Ausgleichsspalt 290 wie in Fig. 3 gezeigt. Während über den Absaugspalt 290 Luft aus dem ersten Innenraum abgesaugt werden kann, dient der Ausgleichsspalt 290 dazu, ein weiteres Verpressen des FKV-Halbzeuges 170 zuzulassen oder auch der Absaugung von Luft während des Konsolidiervorganges.

Wie in Fig. 4A gezeigt, kann in einer formwerkzeugfernen Applikationseinrichtung 330 ein Matrixmaterial 190 auf ein 2-/3-dimensionales Fasergebilde 180 aufgebracht werden. Dabei kann das Matrixmaterial 190 derart auf das 2-/3-dimensionale Fasergebilde 180 aufgebracht werden, dass Aussparungen 200 ausgebildet werden. In diesen Aussparungen 200 ist eine matrixmaterialfreie Zone ausgebildet. Nach Applikation des Matrixmaterials 190 ist das FKV-Halbzeug 170 fertig gestellt.

Die Fig. 4B zeigt den Transport des FKV-Halbzeuges 170 von der Applikationseinrichtung 330 zu dem Formwerkzeug 100, das in Fig. 4C gezeigt ist. Es ist aber auch denkbar, dass das 2-/3-dimensionale Fasergebilde 180, als Faservorformling ausgebildet, in das Formwerkzeug 100 eingelegt wird und dort ein Auftragen bzw. Applizieren des Matrixmaterials 190 vorgenommen wird. In dem Formwerkzeug 100 wird durch Druck, Temperatur und Vakuum das FKV-Halbzeug 170 zu dem in Fig. 4 D gezeigten Faser-Kunststoff-Verbund 350 konsolidiert. Dabei ist der Faser-Kunststoff-Verbund 350 hergestellt nach einem derartigen Verfahren endkonturnah ausgebildet, sodass die Nachbearbeitung des Faser-Kunststoff-Verbundes 350 zumindest verringert, wenn nicht sogar vermeidbar ist.

## Patentansprüche

1. Formwerkzeug (100) zur Herstellung eines Faser-Kunststoff-Verbundes (FKV) (350) aus einem FKV-Halbzeug (170), umfassend eine erste Werkzeughälfte (110), eine zweite Werkzeughälfte (120) und eine erste Dichteinrichtung (210), wobei in das geöffnete Formwerkzeug (100) das FKV-Halbzeug (170) eingelegt werden kann, wobei während eines Verschlussvorganges des Formwerkzeuges (100) die erste Dichteinrichtung (210) einen ersten Innenraum gegenüber einem das Formwerkzeug (100) umgebenden Außenraum druckdicht verschließt, wobei beide Werkzeughälften (110,120) jeweils einen Konsolidierbereich (130,150) aufweisen, mittels deren Zusammenwirken während eines Konsolidiervorganges des Formwerkzeuges (100) das FKV-Halbzeug (170) zum Faser-Kunststoff-Verbund (350) konsolidiert wird, wobei beide Werkzeughälften (110, 120) einen seitlich angeordneten Randbereich (140, 160) aufweisen, der den Konsolidierbereich (130, 150) zumindest teilweise randseitig umgibt,
wobei eine Evakuiervorrichtung vorgesehen ist, mittels der während des Verschlussvorganges der erste Innenraum evakuiert wird,
wobei in den Randbereichen (140,160) der Werkzeughälften (110,120) zwischen der ersten Dichteinrichtung (210) und den Konsolidierbereichen (130,150) eine zweite Dichteinrichtung (220) angeordnet ist, die während des Konsolidiervorganges des Formwerkzeuges (100) einen zweiten Innenraum druckdicht umschließt, um ein Austreten von Matrixmaterial aus dem zweiten Innenraum zu verhindern und einen endkonturnahen Faser-Kunststoff-Verbund herzustellen,
**dadurch gekennzeichnet, dass** zwischen den Randbereichen (140, 160) der beiden Werkzeughälften (110, 120) und im ersten Innenraum ein Ausgleichsspalt (290) angeordnet ist, der in einer weitesten Verschlussposition (310) des Formwerkzeuges (100) größer ist als in einer engsten Verschlussposition (320) des Formwerkzeuges (100).

2. Formwerkzeug nach Anspruch 1,
wobei zumindest eine Werkzeughälfte (110,120) zumindest ein Bauteil aus folgender Gruppe aufweist:
zumindest zwei Werkzeugteile,
eine Schließvorrichtung, mit der zumindest eine Werkzeughälfte (110,120) bewegt werden kann, so dass der Abstand zwischen den Werkzeughälften (110,120) verändert werden kann,
eine Anpressvorrichtung (230), mit der zumindest eine Werkzeughälfte (110,120) auf die andere Werkzeughälfte (120,110) gepresst werden kann,
zumindest einen in zumindest einem Randbereich (140,160) ausgebildeten randseitigen Absaugkanal, der den Außenraum mit dem ersten Innenraum fluidisch leitend verbindet und über den evakuiert wird,
zumindest einen in zumindest einem Konsolidierbereich (130,150) ausgebildeten konsolidierseitigen Absaugkanal, der den Außenraum mit dem jeweiligen Innenraum fluidisch leitend verbindet und über den der jeweilige Innenraum evakuiert wird,
zumindest eine im Randbereich (140,160) umlaufende Nut, in der ein jeweiliges Dichtelement (260,270,280) angeordnet ist,
zumindest eine zwischen der ersten Dichteinrichtung (210) und dem Konsolidierbereich (130,150) im Randbereich (140,160) umlaufende Nut, über die der erste Innenraum evakuiert wird,
zumindest eine Spannstufe im Konsolidierbereich (130,150) zum Tiefziehen zumindest einer Schicht des FKV-Halbzeuges (170).

3. Formwerkzeug nach einem der vorhergehenden Ansprüche,
wobei die erste Dichteinrichtung (210) zumindest ein Bauteil aus folgender Gruppe aufweist:
eine auf den Randbereich der ersten Werkzeughälfte (110) absenkbare Haube, die während des Verschlussvorganges.den zwischen der ersten Werkzeughälfte (110) und der Haube angeordneten ersten Innenraum druckdicht umschließt, wobei die zweite Werkzeughälfte (120) in dem ersten Innenraum angeordnet ist,
ein zwischen dem Randbereich (140,160) der Werkzeughälfte (110,120) und einem Rand der Haube angeordnetes, erstes Dichtelement (260), wobei während des Verschlussvorganges das erste Dichtelement (260) den ersten Innenraum vom Außenraum druckdicht abtrennt,
ein zwischen den Randbereichen (140,160) der Werkzeughälften (110,120) angeordnetes, erstes Dichtelement (260), wobei während des Verschlussvorganges das erste Dichtelement (260) den ersten Innenraum vom Außenraum druckdicht abtrennt,
eine im Randbereich (140) der ersten Werkzeughälfte (110) angeordnete Anpressvorrichtung (230), mittels der während des Verschlussvorganges das erste Dichtelement (260) auf den Randbereich (160) der zweiten Werkzeughälfte (120) gepresst wird,
ein Anpresselement (250) der Anpressvorrichtung (230), das zumindest den Konsolidierbereich (130) der ersten Werkzeughälfte (110) randseitig umgibt, und das eine zum Randbereich (160) der zweiten Werkzeughälfte (120) hin orientiertes erstes Dichtelement (260) aufweisen kann,
ein Spannelement (240), das zwischen dem Randbereich (140) der ersten Werkzeughälfte (110) und dem Anpresselement (250) angeordnet ist und mit dessen Spannkraft während des Verschlussvorganges das Anpresselement (250) auf den Randbereich (160) der zweiten Werkzeughälfte (120) angepresst wird,
ein weiteres erstes Dichtelement (270), das zwischen der ersten Werkzeughälfte (110) und dem Anpresselement (250) angeordnet ist,
den in einer weitesten Verschlussposition (310) des Formwerkzeuges (100) zwischen den Randbereichen (140,160) der beiden Werkzeughälften (110,120) und im ersten Innenraum angeordneten Ausgleichsspalt (290) von maximal 20 mm,
den in einer engsten Verschlussposition (320) des Formwerkzeuges (100) zwischen den Randbereichen (140,160) der beiden Werkzeughälften (110,120) und im ersten Innenraum angeordneten Ausgleichsspalt (290) von maximal 5 mm.

4. Formwerkzeug nach einem der vorhergehenden Ansprüche,
wobei die zweite Dichteinrichtung (220) zumindest ein Bauteil aus folgender Gruppe aufweist:
ein zwischen den Randbereichen (140,160) der Werkzeughälften (110,120) angeordnetes, zweites Dichtelement (280), wobei während des Konsolidiervorganges das zweite Dichtelement (280) den zweiten Innenraum druckdicht umschließt,
einen in einer weitesten Konsolidierposition des Formwerkzeuges (100) zwischen den Randbereichen (140,160) der beiden Werkzeughälften (110,120) und im zweiten Innenraum angeordneten Ausgleichsspalt (290) von maximal 5 mm,
einen in einer engsten Konsolidierposition des Formwerkzeuges (100) zwischen den Randbereichen (140,160) der beiden Werkzeughälften (110,120) und im zweiten Innenraum angeordneten Ausgleichsspalt (290) von maximal 1 mm,
einen zwischen dem Konsolidierbereich (130) der ersten Werkzeughälfte (110) und dem Randbereich (160) der zweiten Werkzeughälfte (120) angeordneten Spalt (300) von maximal 1 mm.

5. Formwerkzeug nach einem der vorhergehenden Ansprüche 2 bis 4,
wobei zumindest eines der Dichtelemente (260, 270, 280) zumindest eine Eigenschaft aus folgender Gruppe aufweist:
ein der Kontur des jeweiligen Randbereiches (41,160) im Wesentlichen folgendes vollförmiges Dichtelement (260,270,280),
ein der Kontur des jeweiligen Randbereiches (140,160) im Wesentlichen folgenden hohlförmigen Dichtschlauch (260),
eine der Kontur des jeweiligen Randbereiches (140,160) im Wesentlichen folgenden Dichtlippe,
einen U-förmigen Querschnitt,
einen quaderförmigen Querschnitt,
einen runden Querschnitt,
einen kreisrunden Querschnitt,
einen elipsoiden Querschnitt,
einen trapezförmigen Querschnitt.

6. Vorrichtung,
wobei in das Formwerkzeug (100) nach einem der vorhergehenden Ansprüche eine Spritzgusseinrichtung integriert ist, mit der einseitig und/oder zweiseitig während des Verschlussvorganges und/oder des Konsolidiervorganges zusätzliche Materialbereiche angespritzt werden können.

7. Verfahren zur Herstellung eines endkonturnahen Faser-Kunststoff-Verbundes (350) mit einem eine erste Werkzeughälfte (110) und eine zweite Werkzeughälfte (120) umfassenden Formwerkzeug (100), nach einem der vorhergehenden Ansprüche,
bei dem in das geöffnete Formwerkzeug (100) ein FKV-Halbzeug (170) eingelegt wird,
bei dem das Formwerkzeug (100) während eines Schließvorganges geschlossen wird,
bei dem ein durch die Werkzeughälften (110,120) begrenzter, erster Innenraum während eines Verschlussvorganges durch eine erste Dichteinrichtung (210) druckdicht verschlossen wird,
wobei zwischen Randbereichen (140, 160) der beiden Werkzeughälften (10, 120) und im ersten Innenraum ein Ausgleichsspalt (290) angeordnet ist, der in einer weitesten Verschlussposition (310) des Formwerkzeuges (100) größer als in einer engsten Verschlussposition (320) des Formwerkzeuges (100) ist,
bei dem während eines Konsolidiervorganges das eingelegte FKV-Halbzeug (170) zu dem Faser-Kunststoff-Verbund (350) konsolidiert wird,
bei dem ein durch die Werkzeughälften (110, 120) begrenzter, zweiter Innenraum während des Konsolidiervorganges durch eine zweite Dichteinrichtung (220)
druckdicht verschlossen wird,
wobei während des Verschlussvorganges mittels einer Evakuiervorrichtung der erste Zwischenraum evakuiert wird.

8. Verfahren nach Anspruch 7,
wobei in beliebiger Anzahl und Reihenfolge zumindest einer der Verfahrensschritte aus folgender Gruppe zusätzlich oder alternativ durchgeführt wird:
das Schließen des Formwerkzeuges (100) wird während des Verschlussvorganges bei einer vordefinierten ersten Verschlussposition unterbrochen,
nach Erreichen einer vordefinierten ersten Konsotidierposition wird der Konsolidiervorgang unterbrochen und das Formwerkzeug (100) in eine vordefinierte zweite Verschlussposition überführt,
vor oder nach dem Einlegen in das Formwerkzeug (100) wird auf das FKV-Halbzeug (170) bereichsweise Matrixmaterial appliziert,
vor oder nach dem Einlegen in das Formwerkzeug (100) wird auf das FKV-Halbzeug (170) einseitig und/oder zweiseitig zumindest bereichsweise eine Oberflächenschicht aufgebracht,
zumindest eine Werkzeughälfte (110,120) wird während des Verschlussvorganges auf eine vorbestimmte Temperatur gebracht,
während des gesamten Verschlussvorganges wird der erste Zwischenraum evakuiert,
zumindest teilweise während des Konsolidiervorganges wird der zweite Zwischenraum evakuiert.

## Claims

1. Moulding tool (100) for manufacturing a fibre-reinforced plastic (FRP) (350) from an FRP semi-finished product (170), comprising a first tool half (110), a second tool half (120) and a first sealing mechanism (210), such that the FRP semi-finished product (170) can be inserted in the opened moulding tool (100), and during a sealing process of the moulding tool (100) the first sealing mechanism (210) seals off an inner space pressure-tight against an outer space surrounding the moulding tool (100), both tool halves (110, 120) each having a consolidation zone (130, 150), by means of the interaction of which during a consolidation process of the moulding tool (100) the FRP semi-finished product (170) is consolidated to fibre-reinforced plastic (350), and both tool halves (110, 120) each having an edge zone (140, 160) surrounding the consolidation zone (130, 150) at least in part.
wherein provision of an evacuation device, by means of which the first inner space is evacuated during the sealing process,
wherein a second sealing mechanism (220) is arranged at the edge zones (140, 160) of the tool halves (110, 120) between the first sealing mechanism (210) and the consolidation zones (130, 150), which during the consolidation process of the moulding tool (100) surrounds a second inner chamber pressure-tight so as prevent any egress of matrix material out of the second inner space and to produce a fibre-plastic composite of approximately the final shape, **characterised in that** an equalisation gap (290) is arranged between the edge zones (140, 160) of the two tool halves (110, 120) and in the first inner space, which in a widest sealing position (310) of the moulding tool (100) is larger than in a narrowest sealing position (320) of the moulding tool (100).

2. Method according to Claim 1, wherein at least one tool half (110, 120) includes at least one part from the following group:
at least two tool parts,
a closing mechanism with which at least one tool half (110, 120) can be moved so that the distance between the tool halves (110, 120) can be varied,
a pressing mechanism (230), with which at least one tool half (110, 120) can pressed against the other tool half (120, 110),
at least one edge-side extraction duct formed in at least one edge zone (140, 160), providing a connecting passage for fluids between the outer space and the first inner space, and through which evacuation takes place,
at least one consolidation-side extraction duct formed in at least one consolidation zone (130, 150), providing a connecting passage for fluids between the outer space and the respective inner space, and through which the respective inner space is evacuated,
at least one groove running around the edge zone (140, 160) in each of which a sealing element (260, 270, 280) is arranged,
at least one groove running around the edge zone (140, 160) between the first sealing mechanism (210) and the consolidation zone (130, 150), through which the first inner space is evacuated,
at least one clamping stage in the consolidation zone (130, 150) for deep-drawing at least one layer of the FRP semi-finished product (170).

3. Moulding tool according to any of the above claims, wherein the first sealing mechanism (210) includes at least one part from the following group:
a cowling lowerable on to the edge zone of the first tool half (110), which during the sealing process encloses pressure-tight the first inner space arranged between the first tool half (110) and the cowling, the second tool half,(120) being arranged inside the first inner space,
a first sealing element (260) arranged between the edge zone (140, 160) of the tool half (110, 120) and one edge zone of the cowling, such that during the sealing process the first sealing element (260) seals off the first inner space pressure-tight against the outer space,
a first sealing element (260) arranged between the edge zones (140, 160) of the tool halves (110, 120), such that during the sealing process the first sealing element (260) seals off the first inner space pressure-tight against the outer space,
a press mechanism (230) arranged in the edge zone (140) of the first tool half (110), by means of which the first sealing element (260) is pressed against the edge zone (160) of the second tool half (120) during the sealing process,
a pressure element (250) of the press mechanism (230), surrounding at least the consolidation zone (130) of the first tool half (110) at the edge, that can be equipped with a first sealing element (260) oriented towards the edge zone (160) of the second tool half (120),
a clamping element (240) arranged between the edge zone (140) of the first tool half (110) and the pressure element (250), and with the clamping force of which the pressure element (250) is pressed against the edge zone (160) of the second tool half (120) during the sealing process,
a further first sealing element (270) arranged between the first tool half (110) and the pressure element (250),
the equalisation gap (290) arranged in a widest sealing position (310) of the moulding tool (100) between the edge zones (140, 160) of the two tool halves (110, 120) and in the first inner space, with a maximum size of 20 mm ,
the equalisation gap (290) arranged in a narrowest sealing position (320) of the moulding tool (100) between the edge zones (140, 160) of the two tool halves (110, 120) and in the first inner space, with a maximum size of 5 mm.

4. Moulding tool according to any of the above claims, wherein the second sealing mechanism (220) includes at least one part from the following group:
a second sealing element (280) arranged between the edge zones (140, 160) of the tool halves (110, 120), which second sealing element (280) encloses the second inner space pressure-tight during the consolidation process,
an equalisation gap (290) arranged in the widest consolidation position of the moulding tool (100) between the edge zones (140, 160) of the two tool halves (110, 120) and their second inner space, with a maximum size of 5 mm,
an equalisation gap (290) arranged in the narrowest consolidation position of the moulding tool (100), between the edge zones (140, 160) of the two tool halves (110, 120) and in the second inner space, with a maximum size of 1 mm,
a gap (300) arranged between the consolidation zone (130) of the first tool half (110) and the edge zone (160) of the second tool half (120), with a maximum size of 1 mm.

5. Moulding tool according to any of the above claims 2 to 4, wherein at least one of the sealing elements (260, 270, 280) exhibits at least one property from the following group:
a solid sealing element (260, 270, 280) following essentially the contour of the respective edge zone (41, 160)
a hollow sealing element (260) following essentially the contour of the respective edge zone (140 ,160) a sealing lip following essentially the contour of the respective edge zone (140, 160),
a U-shaped cross-section,
a rectangular-shaped cross-section,
a round cross-section,
a circular cross-section,
an ellipsoidal cross-section,
a trapezoidal cross-section.

6. Device, wherein an injection-moulding device is integrated in the moulding tool (100) according to any of the above claims, with which material can be injected into additional areas at one side and/or two sides during the sealing process and/or the consolidation process.

7. Method for manufacturing a fibre-reinforced plastic (350) with a moulding tool (100) comprising a first tool half (110) and a second tool half (120) in accordance with any of the above claims, in which an FRP semi-finished product (170) is inserted in the opened moulding tool (100),
in which the moulding tool (100) is closed during a sealing process,
in which a first inner space bounded by the tool halves (110, 120) is sealed pressure-tight by a first sealing mechanism (210) during a sealing process, wherein an equalisation gap (290) is arranged between the edge zones (140, 160) of the two tool halves (10, 120) and in the first inner space, which in the widest sealing position (310) of the moulding tool (100) is larger than in the narrowest sealing position (320) of the moulding tool (100),
in which the inserted FRP semi-finished product (170) is consolidated to the fibre-reinforced plastic (350) during a consolidation process,
in which a second inner space bounded by the tool halves (110, 120) is sealed pressure-tight by a first sealing mechanism (220) during the consolidation process,
wherein the first intermediate space is evacuated during the sealing process by an evacuation device.

8. Method according to claim 7, wherein in any desired number and order, at least one of the method steps from the following group is carried out either additionally or alternatively:
the closing of the moulding tool (100) is interrupted at a predefined first sealing position during the sealing process,
on reaching a predefined first consolidation zone, the consolidation process is interrupted and the moulding tool (100) is transferred to a predefined second sealing position,
matrix material is applied over areas of the FRP semi-finished product (170) before or after insertion in the moulding tool (100),
before or after insertion in the moulding tool (100), a surface layer is applied to at least in some areas of the FRP semi-finished product (170) on one side and/or two sides,
at least one tool half (110, 120) is brought up to a predetermined temperature during the sealing process, the first intermediate space is evacuated during the entire sealing process,
the second intermediate space is at least partially evacuated during the consolidation process.

## Revendications

1. Outil de formage (100) pour la fabrication d'un matériau composite plastique renforcé par des fibres (FKV) (350) à partir d'un produit semi-fini FKV (170), comprenant une première moitié d'outil (110), une deuxième moitié d'outil (120) et un premier dispositif d'étanchéité (210), le produit semi-fini FKV (170) pouvant être placé dans l'outil de formage ouvert (100), le premier dispositif d'étanchéité (210) fermant de manière étanche à la pression, pendant une opération de fermeture de l'outil de formage (100), un premier espace intérieur par rapport à un espace extérieur qui entoure l'outil de formage (100), les deux moitiés d'outil (110, 120) comportant chacune une zone de consolidation (130, 150) au moyen de la coopération desquelles le produit semi-fini FKV (170) est consolidé en un matériau composite plastique renforcé par des fibres (350) pendant une opération de consolidation de l'outil de formage (100), les deux moitiés d'outil (110, 120) comportant une zone de bord agencée latéralement (140, 160) qui entoure au moins partiellement, sur les bords, la zone de consolidation (130, 150),
un dispositif d'évacuation étant prévu, dispositif d'évacuation au moyen duquel le vide est fait dans le premier espace intérieur pendant l'opération de fermeture,
un deuxième dispositif d'étanchéité (220) étant agencé dans les zones de bord (140, 160) des moitiés d'outil (110, 120) entre le premier dispositif d'étanchéité (210) et les zones de consolidation (130, 150), lequel deuxième dispositif d'étanchéité entoure de manière étanche à la pression un deuxième espace intérieur pendant l'opération de consolidation de l'outil de formage (100) pour empêcher une sortie du matériau matriciel hors du deuxième espace intérieur et pour fabriquer un matériau composite plastique renforcé par des fibres proche des contours finaux,
**caractérisé en ce que**, entre les zones de bord (140, 160) des deux moitiés d'outil (110, 120) et dans le premier espace intérieur, est agencée une fente de compensation (290) qui est plus grande dans la position de fermeture la plus large (310) de l'outil de formage (100) que dans la position de fermeture la plus étroite (320) de l'outil de formage (100).

2. Outil de formage selon la revendication 1,
au moins une moitié d'outil (110, 120) comportant au moins un élément du groupe suivant :
au moins deux parties d'outil,
un dispositif de fermeture, avec lequel au moins une moitié d'outil (110, 120) peut être déplacée de telle sorte que la distance entre les moitiés d'outil (110, 120) peut être modifiée,
un dispositif de serrage (230), avec lequel au moins une moitié d'outil (110, 120) peut être pressée sur l'autre moitié d'outil (120, 110),
au moins un canal d'aspiration, du côté du bord, qui est conçu dans au moins une zone de bord (140, 160) et qui relie pour la conduite des fluides l'espace extérieur avec le premier espace intérieur et par l'intermédiaire duquel le vide est fait,
au moins un canal d'aspiration, du côté de la consolidation, qui est conçu dans au moins une zone de consolidation (130, 150) et qui relie pour la conduite des fluides l'espace extérieur avec l'espace intérieur respectif et par l'intermédiaire duquel le vide est fait dans l'espace intérieur respectif,
au moins une rainure qui fait le tour dans la zone de bord (140, 160) et dans laquelle un élément d'étanchéité respectif (260, 270, 280) est agencé,
au moins une rainure qui fait le tour dans la zone de bord (140, 160) entre le premier dispositif d'étanchéité (210) et la zone de consolidation (130, 150) et par l'intermédiaire de laquelle le vide est fait dans le premier espace intérieur,
au moins un degré de serrage dans la zone de consolidation (130, 150) pour l'emboutissage d'au moins une couche du produit semi-fini FKV (170).

3. Outil de formage selon l'une des revendications précédentes,
le premier dispositif d'étanchéité (210) comportant au moins un élément du groupe suivant :
un capot qui peut être abaissé sur la zone de bord de la première moitié d'outil (110) et qui entoure de manière étanche à la pression le premier espace intérieur agencé entre la première moitié d'outil (110) et le capot pendant l'opération de fermeture, la deuxième moitié d'outil (120) étant agencée dans le premier espace intérieur,
un premier élément d'étanchéité (260) agencé entre la zone de bord (140, 160) de la moitié d'outil (110, 120) et un bord du capot, le premier élément d'étanchéité (260) réalisant une séparation étanche à la pression entre le premier espace intérieur et l'espace extérieur pendant l'opération de fermeture,
un premier élément d'étanchéité (260) agencé entre les zones de bord (140, 160) des moitiés d'outil (110, 120), le premier élément d'étanchéité (260) réalisant une séparation étanche à la pression entre le premier espace intérieur et l'espace extérieur pendant l'opération de fermeture,
un dispositif de serrage (230) qui est agencé dans la zone de bord (140) de la première moitié d'outil (110) et au moyen duquel le premier élément d'étanchéité (260) est pressé sur la zone de bord (160) de la deuxième moitié d'outil (120) pendant l'opération de fermeture,
un élément de serrage (250) du dispositif de serrage (230), lequel élément de serrage entoure sur les bords au moins la zone de consolidation (130) de la première moitié d'outil (110) et peut comporter un premier élément d'étanchéité (260) orienté en direction de la zone de bord (160) de la deuxième moitié d'outil (120),
un élément de serrage (240) qui est agencé entre la zone de bord (140) de la première moitié d'outil (110) et l'élément de serrage (250) et avec la force de serrage duquel l'élément de serrage (250) est pressé sur la zone de bord (160) de la deuxième moitié d'outil (120) pendant l'opération de fermeture,
un autre premier élément d'étanchéité (270) qui est agencé entre la première moitié d'outil (110) et l'élément de serrage (250),
la fente de compensation (290), agencée entre les zones de bord (140, 160) des deux moitiés d'outil (110, 120) et dans le premier espace intérieur, d'au maximum 20 mm dans la position de fermeture la plus large (310) de l'outil de formage (100),
la fente de compensation (290), agencée entre les zones de bord (140, 160) des deux moitiés d'outil (110, 120) et dans le premier espace intérieur, d'au maximum 5 mm dans la position de fermeture la plus étroite (320) de l'outil de formage (100).

4. Outil de formage selon l'une des revendications précédentes,
le deuxième dispositif d'étanchéité (220) comportant au moins un élément du groupe suivant :
un deuxième élément d'étanchéité (280) agencé entre les zones de bord (140, 160) des moitiés d'outil (110, 120), le deuxième élément d'étanchéité (280) entourant de manière étanche à la pression le deuxième espace intérieur pendant l'opération de consolidation,
une fente de compensation (290), agencée dans la position de consolidation la plus large de l'outil de formage (100) entre les zones de bord (140, 160) des deux moitiés d'outil (110, 120) et dans le deuxième espace intérieur, d'au maximum 5 mm,
une fente de compensation (290), agencée dans la position de consolidation la plus étroite de l'outil de formage (100) entre les zones de bord (140, 160) des deux moitiés d'outil (110, 120) et dans le deuxième espace intérieur, d'au maximum 1 mm,
une fente (300), agencée entre la zone de consolidation (130) de la première moitié d'outil (110) et la zone de bord (160) de la deuxième moitié d'outil (120), d'au maximum 1 mm.

5. Outil de formage selon l'une des revendications 2 à 4,
au moins l'un des éléments d'étanchéité (260, 270, 280) ayant au moins une propriété du groupe suivant :
un élément. d'étanchéité (260, 270, 280), plein, qui suit sensiblement le contour de la zone de bord respective (41, 160),
un tuyau d'étanchéité (260), creux, qui suit sensiblement le contour de la zone de bord respective (140, 160),
une lèvre d'étanchéité qui suit sensiblement le contour de la zone de bord respective (140, 160),
une section transversale en forme de U,
une section transversale rectangulaire,
une section transversale arrondie,
une section transversale ronde,
une section transversale en forme d'ellipse,
une section transversale en forme de trapèze.

6. Dispositif dans lequel, dans l'outil de formage (100) selon l'une des revendications précédentes, est intégré un dispositif de moulage par injection avec lequel des zones de matériau supplémentaires peuvent être injectées d'un côté et/ou des deux côtés pendant l'opération de fermeture et/ou pendant l'opération de consolidation.

7. Procédé de fabrication d'un matériau composite plastique renforcé par des fibres (350) proche des contours finaux avec un outil de formage (100) comprenant une première moitié d'outil (110) et une deuxième moitié d'outil (120) selon l'une des revendications précédentes,
selon lequel on place dans l'outil de formage (100) ouvert un produit semi-fini FKV (170),
selon lequel on ferme l'outil de formage (100) pendant une opération de fermeture,
selon lequel on ferme de manière étanche à la pression, avec un premier dispositif d'étanchéité (210), pendant une opération de fermeture, un premier espace intérieur délimité par les moitiés d'outil (110, 120),
une fente de compensation (290) étant agencée entre des zones de bord (140, 160) des deux moitiés d'outil (10, 120) et dans le premier espace intérieur, laquelle fente de compensation est plus grande dans la position de fermeture la plus large (310) de l'outil de formage (100) que dans la position de fermeture la plus étroite (320) de l'outil de formage (100),
selon lequel le produit semi-fini FKV (170) mis en place est consolidé en un matériau composite plastique renforcé par des fibres (350) pendant une opération de consolidation,
selon lequel on ferme de manière étanche à la pression, avec un deuxième dispositif d'étanchéité (220), pendant l'opération de consolidation, un deuxième espace intérieur délimité par les moitiés d'outil (110, 120),
le vide étant fait dans le premier espace intermédiaire au moyen d'un dispositif d'évacuation pendant l'opération de fermeture.

8. Procédé selon la revendication 7,
selon lequel on effectue au moins l'une des étapes de procédé du groupe suivant, en complément ou en remplacement, en un nombre quelconque et dans un ordre quelconque :
on interrompt la fermeture de l'outil de formage (100) pendant l'opération de fermeture dans une première position de fermeture prédéfinie,
après avoir atteint une première position de consolidation prédéfinie, on interrompt l'étape de consolidation et on met l'outil de formage (100) dans une deuxième position de fermeture prédéfinie,
avant ou après la mise en place dans l'outil de moulage (100), on applique un matériau matriciel par endroits sur le produit semi-fini FKV (170),
avant ou après la mise en place dans l'outil de formage (100), on applique au moins par endroits une couche de surface, d'un côté et/ou des deux côtés, sur le produit semi-fini FKV (170),
on amène au moins au moins une moitié d'outil (110, 120) à une température prédéterminée pendant l'opération de fermeture,
on fait le vide dans le premier espace intermédiaire pendant toute l'opération de fermeture,
on fait le vide dans le deuxième espace intermédiaire au moins partiellement pendant l'opération de consolidation.
